# EUROPÄISCHE PATENTSCHRIFT

(11) **EP 1 234 917 B1**
(45) Veröffentlichungstag und Bekanntmachung des Hinweises auf die Patenterteilung: **03.01.2007**
(21) Anmeldenummer: 01104765.1
(22) Anmeldetag: 27.02.2001
(51) Int. Cl.: E03C 1/04, F16K 39/02

(54) **Sanitärarmatur**
Sanitary fitting
Robinetterie sanitaire

(43) Veröffentlichungstag der Anmeldung: 28.08.2002
(73) Patentinhaber: KWC AG, CH-5726 Unterkulm (CH)
(72) Erfinder: Gloor, Herbert, 5726 Unterkulm (CH)
(74) Vertreter: Schaad, Balass, Menzl & Partner AG

(56) Entgegenhaltungen:
- EP-A- 0 927 580
- EP-A- 1 069 249
- DE-A- 2 427 809
- DE-A- 19 608 482
- FR-A- 1 601 276
- US-A- 1 550 448
- US-A- 6 060 092

## Beschreibung

Die Erfindung betrifft eine Sanitärarmatur mit einem für verschiedene Flüssigkeits qualitäten bestimmten, Auslassstutzen gemäss dem Oberbegriff des Anspruchs 1.

Eine Sanitärarmatur dieser Art ist in der US 1, 550, 448 offenbart. Eines von zwei Kanalsystemen ist für Warm- und Kaltwasser vorgesehen und das andere mit einer Hubventilanordnung versehene Kanalsystem wird mit Eiswasser gespeist.

Die EP 1 069 249 offenbart eine Sanitärarmatur zur Abgabe von karbonisiertem Wasser. Hierbei wird herkömmlichem Trinkwasser aus dem Leitungsnetz Kohlendioxid zugesetzt und der Sanitärarmatur zugeführt. Um eine Ausgasung von Kohlendioxid zu vermeiden, wird das mit Kohlendioxid angereicherte Wassers unabhängig von der Durchflussmengensteuerung mittels einer separaten Drosseleinrichtung auf Umgebungsdruck entspannt.

Weitere Sanitärarmaturen sind bekannt durch die EP-A-0 501 989 und die DE-A-196 08 482. Diese Sanitärarmaturen haben drei separate Zuleitungen, einerseits für kaltes und warmes Brauchwasser, mit einem gemeinsamen Auslass für Mischwasser und andererseits eine Zuleitung für Trinkwasser, das in einer zuströmseitig angeordneten Filtereinrichtung und/oder einer separaten Apparatur zur Zumischung von Kohlensäure aufbereitet worden ist. Für die getrennte, Entnahme von Brauchwasser und Trinkwasser zeigen diese Vorveröffentlichungen verschiedene konstruktive Lösungen, die beide eine Ventilanordnung verwenden, bei der ein Betätigungselement eine Hebelbewegung ausführt und eine Drehbewegung eines Schliesskörpers ein kontinuierliches Öffnen des Auslasskanals bewirkt. Dies hat den Nachteil, dass insbesondere bei der Entnahme von unter höherem Druck stehenden, z.B. mit Kohlensäure aufbereitetem Trinkwasser die Betätigung der Ventilanordnung und Dosierung der ausströmenden Trinkwassermenge besondere Sorgfalt erfordert. Andererseits ergibt sich der Vorteil, dass sich der Druck im abzusperrenden Kanalsystem nicht wesentlich auf die Betätigungskraft der Hebelbewegung auswirkt.

Der Erfindung liegt die Aufgabe zugrunde, eine für die separate Ausgabe von kohlensäurehaltigen Getränken, insbesondere Wasser geeignete, einfach und mit geringem Kraftaufwand zu bedienende und die Dosierung einer Wassermenge erleichternde Sanitärarmatur zu finden. Ausserdem soll sie einfach herstellbar bzw. montierbar sein. Die Lösung dieser Aufgabe erfolgt erfindungsgemäss aufgrund der Merkmale des Patentanspruchs 1. Bevorzugte Ausgestaltungen der Erfindung sind Gegenstand der abhängigen Patentansprüche und der folgenden Beschreibung an Hand der Zeichnungen zu entnehmen. Es zeigt:
- Fig.1: einen Axialschnitt durch eine Sanitärarmatur mit einer ersten Ausführungsform einer Ventilanordnung,
- Fig.2: eine vergrösserte Darstellung der Sanitärarmatur nach Fig.1 bei geöffnetem Ventil und eingesetzter Schlauchbrause,
- Fig.3: eine vergrösserte Teildarstellung der Sanitärarmatur nach Fig.1 und Fig. 2 bei geschlossenem Ventil und ohne eingesetzte Schlauchbrause,
- Fig.4: eine vergrösserte Darstellung einer Sanitärarmatur mit einer zweiten Ausführungsform einer Ventilanordnung und eingesetzter Schlauchbrause, bei geöffnetem Ventil
- Fig.5: eine vergrösserte Teildarstellung der Sanitärarmatur nach Fig.4 bei geschlossenem Ventil.

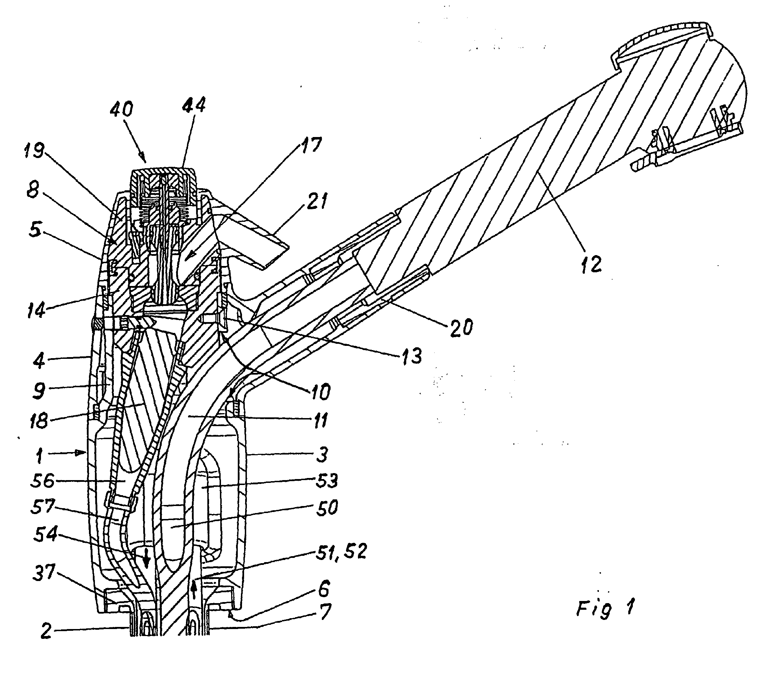

Wie die Darstellung der Fig.1 gesamthaft zeigt, hat die Sanitärarmatur ein säulenartiges Armaturengehäuse 1, das mehrteilig zusammengesetzt ist und einen Sockelteil 3, einen Gehäusemittelteil 4 und einen Gehäusekopf 5 aufweist.

Der Sockelteil 3 ist durch einen eingeschraubten Flanschrand 37 eines unteren Anschlussstutzens 2 geschlossen und bildet mit diesem zusammen eine untere Standfläche 6, die zur Anlage an einem im wesentlichen horizontal verlaufenden, nichtdargestellten Spülbeckenrand oder einem Spültisch bestimmt ist. Die Fixierung des Armaturengehäuses 1 erfolgt durch klemmende Halterung mittels einer auf das Aussengewinde 7 des Anschlussstutzens 2 aufschraubbaren und sich an der Unterseite des Spülbeckenrandes oder der Tischplatte abstützenden Mutter.

Nach oben setzt sich der Sockelteil 3 einteilig zu einem Gehäuseinnenstutzen 9 fort, der sich über einen wesentlichen Teil des mittleren Gehäuseteils 4 erstreckt und somit von diesem umschlossen ist. Eine seitliche Öffnung 10 im Gehäusestutzen 9 dient der seitlichen Herausführung des Schlauches 11 einer Schlauchbrause 12.

Weiterhin trägt der Gehäusestutzen 9 in seinem oberen Bereich einen mit ihm verdrehfest durch eine radial gerichtete Schraube 13 verbundenen unteren Montagekörper 14, welcher zusammen mit einem oberen Montagekörper 19 einen inneren Gehäusekörper 8 bildet. Der untere Montagekörper 14 dient zur Aufnahme und Befestigung eines Ventilsitzkörpers 15 einer Ventilanordnung 17, der obere Montagekörper 19 zur Aufnahme einer Betätigungsvorrichtung 40 dieser Ventilanordnung 17.

Der mittlere Gehäuseteil 4 und der Gehäusekopf 5 gehen seitlich in je einen angeformten Auslassstutzen 20,21 über. Der untere Auslassstutzen 20 verläuft schräg nach oben, um auf an sich z.B. durch die EP-A-0 447 777 bekannte Weise der Halterung und Führung der Schlauchbrause 12 zu dienen. Der obere, für aufbereitetes Wasser vorgesehene Auslassstutzen 21 ist schräg abwärts gerichtet, so dass das Wasser zielgerichtet in ein herangehaltenes Trinkgefäss ausgelassen werden kann.

Der Gehäusesockel 3, der Gehäusemittelteil 4 und der Gehäusekopf 5 sind teleskopartig ineinander gesteckt und stützen sich durch den Kontakt zwischen umlaufenden Absätzen 22,23 und stirnseitigen Endflächen 24,25 formschlüssig aneinander ab und sind ausserdem durch in diesen Bereichen angeordnete Gleitringe 26,27 sowie einen 0-Ring 28 gegenseitig verdrehbar gegeneinander gelagert und abgedichtet. Somit ist der Gehäusemittelteil 4 zwischen dem Gehäusesockel 3 und dem Gehäusekopf 5 axial fixiert.

Die axiale Verbindung zwischen dem Gehäusesockel 3 und dem Gehäusekopf 5 erfolgt über den durch die Schraube 13 am Gehäusesockel 3 bzw. dessen Gehäusestutzen 9 befestigten unteren Montagekörper 14. Eine oder mehrere versenkt im oberen Montagekörper 19 angeordnete Schrauben 29 verbinden diesen mit dem Kopfteil 5. Um trotz der durch die Schraube 13 hergestellten verdrehfesten Verbindung zwischen dem Gehäusesockel 3 und unteren Montagekörper 14 des inneren Gehäusekörpers 8 eine Verdrehbarkeit des Gehäusekopfes 5 bzw. seines Auslassstutzens 21 in eine gebrauchsgerechte, veränderliche Position relativ zu dem Gehäusesockel 3 zu gewährleisten, sind der untere und obere Montagekörper 14,19 gegenseitig verdrehbar miteinander verbunden. Hierfür haben diese zu ihren aneinander liegenden Radialflächen 30,31 parallel umlaufende Nuten 32,33, in die zwei im Querschnitt u-förmige Halbringe 34,35 von radial aussen eingeschoben sind. Eine über diese aufgeschobene Hülse 36 sichert die Halbringe 34,35 in den Nuten 32,33.

Aus der vorangehenden Beschreibung des konstruktiven Aufbaus des säulenartigen Armaturengehäuses 1 ergibt sich, dass der Zusammenbau der Sanitärarmatur auf einfache Weise exakt ausführbar ist. Hierzu wird der untere Montagekörper 14 zusammen mit dem in ihn eingeschraubten Kompensatorkörper 16 und dem ebenfalls eingeschraubten zur Ventilsitzkörper 15 der Ventilanordnung 17 in den Gehäusestutzen 9 des Gehäusesockels 3 eingeschoben, so dass seine umlaufende Schulter 38 an dessen oberen Stirnfläche 39 zum Anschlag gelangt. Anschliessend wird der obere Montagekörper 19 zusammen mit zumindest einem Teil der Betätigungseinrichtung 40 der Ventilanordnung 17 und deren Ventilschliesskörper 41 in den unteren Montagekörper 14 eingesetzt, so dass sein Verbindungsstutzen 42 zusammen mit einer O-Ringdichtung 43 in diesen formschlüssig und dichtend eindringt. Anschliessend werden der Gehäusemittelteil 4 mit dem Aufnahmestutzen 20 für die Schlauchbrause 12 und der Gehäusekopf 5 mit dem Auslassstutzen 21 für Trinkwasser von oben auf die somit vorhandene Anordnung aufgeschoben und durch die Schraube 29 gesichert. Abschliessend wird die Betätigungstaste 44 der Betätigungseinrichtung 40 der Ventilanordnung 17 zusammen mit einer an ihrem Umfang vorgesehenen O-Ringdichtung 45 in einen inneren Gehäusestutzen 46 des Gehäusekopfes 5 eingeschoben und durch Einrasten mit der Betätigungseinrichtung 40 verbunden.

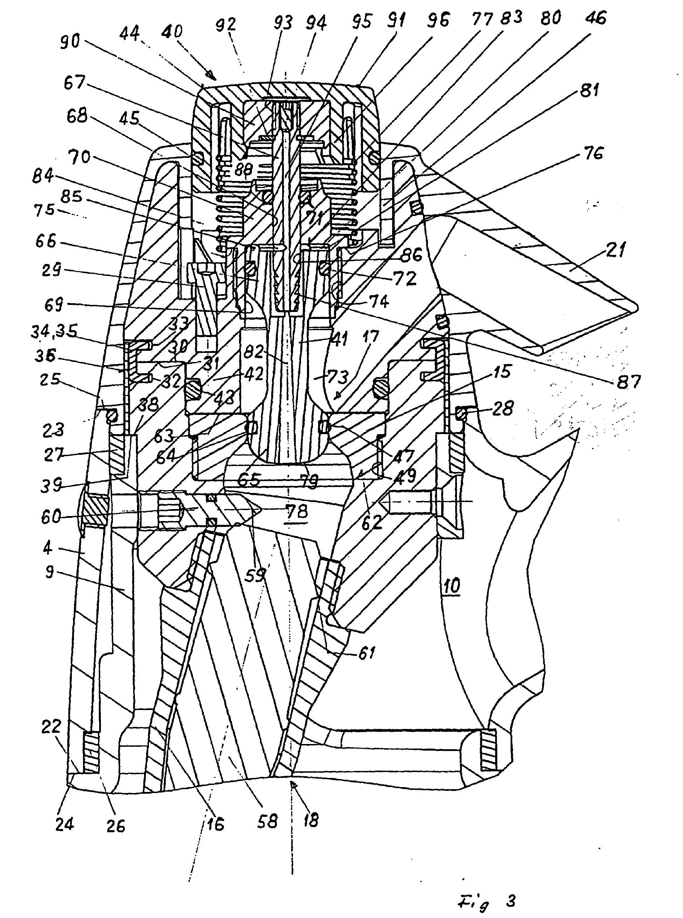

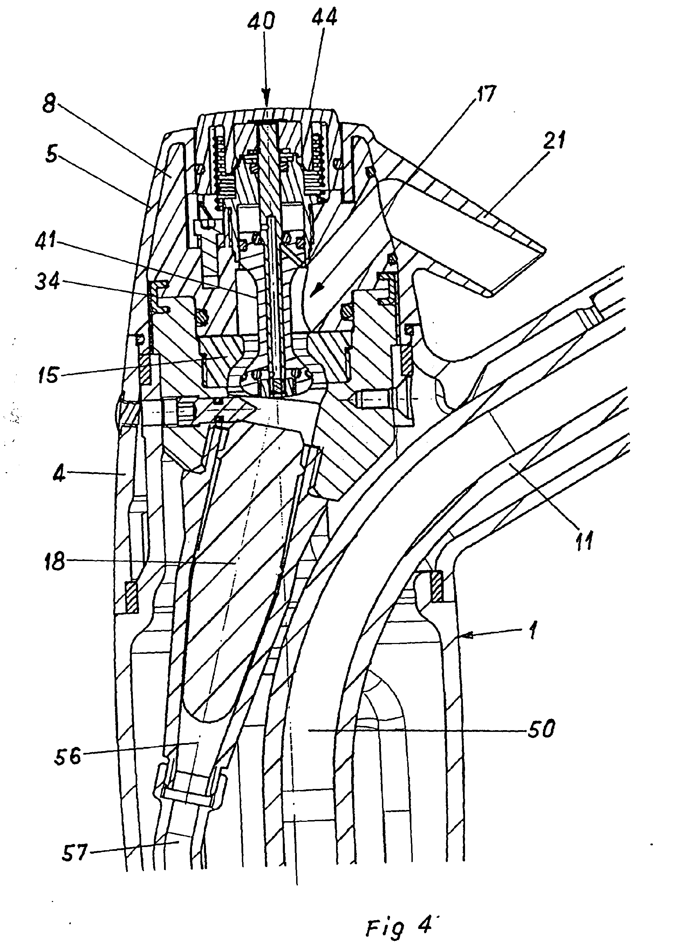

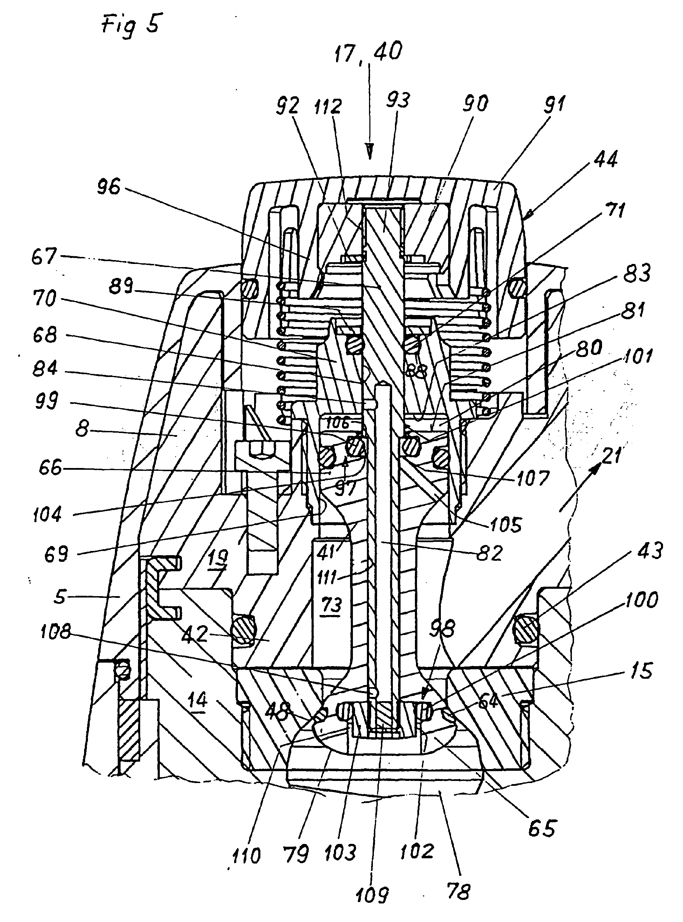

Es versteht sich, dass das Einsetzen des oberen Montagekörpers 19 in den unteren Montagekörper 14 zusammen mit dem Ventilschliesskörper 41 eine Ventilkonstruktion voraussetzt, bei der der Ventilschliesskörper 41 durch den Ventilsitzkörper 15 hindurchschiebbar ist, um in eine geöffnete Ventilposition bewegt zu werden und entsprechend seine Dichtposition entsprechend der Darstellung in Fig.3 an einer zylindrischen Innenfläche 47 des Ventilsitzkörpers 15 einnimmt. Hingegen ist es bei einer Ventilanordnung 17 (gemäss Fig. 4 + 5) mit einer Dichtposition an einer zuströmseitigen Schrägfläche 48 des Ventilsitzkörpers 15 erforderlich, zuvor den Ventilschliesskörper 41 zusammen mit dem Ventilsitzkörper 15 am unteren Montagekörper 14 vorzusehen, so dass seine Verbindung mit der zugehörigen Betätigungseinrichtung 40 erst mit oder nach dem Einsetzen des oberen Montagekörpers 19 erfolgen kann.

Das für Brauchwasser vorgesehene Kanalsystem 50 der Sanitärarmatur ist ähnlich ausgeführt wie Fig.1 der EP-A-0 447 777 zeigt, indem eine durch den Anschlussstutzen 2 geführte Kalt- und Warmwasserleitung 51,52 an eine Mischpatrone 53 angeschlossen sind, von der eine Mischwasserleitung 54 durch den Anschlussstutzen 2 nach aussen geführt ist, um über eine unterhalb der Sanitärarmatur hängend verlaufende Vorratsschlaufe in dem Schlauch 11 der Schlauchbrause 12 zu münden. Die Betätigung der Mischpatrone 53 erfolgt von aussen durch eine seitlich am Armaturengehäuse 1, in den Zeichnungen rückseitig angeordnete und dadurch in diesen nicht sichtbare Betätigungseinrichtung, die aus einem Drehknopf oder einem Hebel besteht.

Das für aufbereitetes Wasser bzw. Trinkwasser vorgesehene Kanalsystem 56 hat eine durch den unteren Anschlussstutzen 2 eingeführte Anschlussleitung 57, die an das trichterförmige Kompensatorgehäuse 16 angeschlossen ist. Die Position des als Druckkompensator dienenden spindelförmigen Regulierkörpers 58 wird durch die Anlageposition an der kegelförmigen Schrägfläche 59 einer seitlich in den inneren Gehäusekörper 8 eingeschraubten Stellschraube 60 bestimmt. Seitliche Zentriernoppen 61 dienen der Sicherung der zentralen Position des umströmten Regulierkörpers 58 im trichterförmigen Kompensatorgehäuse 16. Da die Druckkompensation nur für mit Kohlensäure aufbereitetes und entsprechend unter höherem Druck von ca. 5 bar stehendem Wasser oder anderen kohlensäurehaltigen Getränken erforderlich ist, kann der spindelförmige Regulierkörper 58 für nur durch Filtern aufbereitetes Wasser weggelassen bzw. entfernt werden.

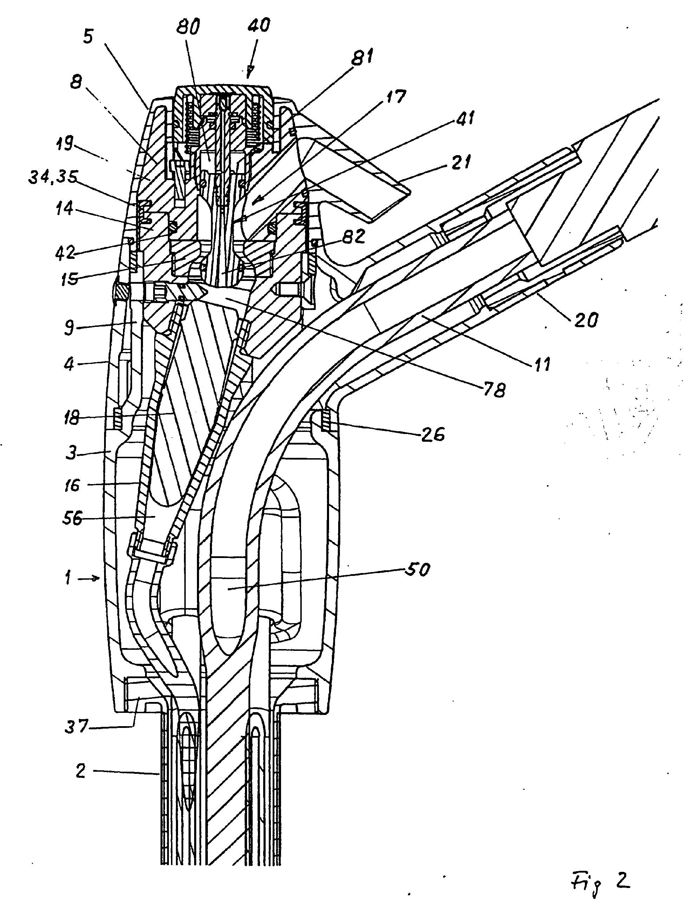

Die Zeichnungen zeigen zwei Ausführungsbeispiele der, ein Hubventil aufweisenden Ventilanordnung 17. Da diese mehrere Gemeinsamkeiten aufweisen, sind übereinstimmende Teile mit gleichen Ziffern bezeichnet. Ein erstes Ausführungsbeispiel wird im Folgenden an Hand der Fig.2 und 3 näher erläutert.

Das Gehäuse 8 der Ventilanordnung 17 besteht aus einem unteren und oberen Gehäusekörper 14,19, die über einen Verbindungsstutzen 42 formschlüssig ineinander greifen und durch einen am Verbindungsstutzen vorgesehenen 0-Ring 43 gegenseitig abgedichtet sind. Um die Umfangsposition des Auslassstutzens 21 relativ zu dem für eine feststehende Anordnung vorgesehenen unteren Gehäusekörper 14 verändern zu können, sind sie in axialer Richtung derart aneinander befestigt, dass sie gegeneinander verdrehbar sind. Hierzu dienen zwei im Querschnitt u-förmige Halbringe 34,35, die von radial aussen in umlaufende Nuten 32,33 eingesetzt sind. Eine über die Halbringe 34, 35 aufgeschobene Hülse 36 sichert sie in dieser Position. Es ist möglich, auf die Hülse 36 zu verzichten und gegebenenfalls die Halbringe 34, 35 selbsthaltend einschnappbar auszubilden.

Der Ventilsitzkörper 15 ist mit der Innenwand 49 des unteren Gehäusekörpers 14 verschraubt und zwischen einem inneren Absatz 62 und der Stirnseite 63 des Verbindungsstutzens 42 eingeschlossen, so dass er gemeinsam mit dem unteren Gehäusekörper 14 feststehend gehalten ist.

Der Ventilschliesskörper 41 ist länglich und tailliert und bildet mit seinem einen Ende einen mit einem Dichtring 64 zusammenwirkenden Schliessteil 65, während sein anderes Ende einen Führungskolben 66 bildet, von dem sich ein Ventilschaft 67 nach Art einer Kolbenstange wegerstreckt. Dieser Führungskolben 66 des Ventilschliesskörpers 41 und der Ventilschaft 67 sind in gegeneinander abgestuften Bohrungen 68,69 eines im oberen Gehäusekörper 19 vorgesehenen Dichtkörpers 70 geführt, sodass dieser, unterstützt durch Dichtringe 71,72, den Ventilraum 73 nach aussen abdichtet. Der Dichtkörper 70 ist mit Gewindeeingriff vom oberen Teil einer zentralen Bohrung 74 des oberen Gehäusekörpers 19 aufgenommen und liegt mit einer Schulterfläche 75 an einer ebenen Radialfläche 76 desselben an.

Am äusseren Ende des Ventilschaftes 67 ist eine Betätigungstaste 44 befestigt, die von einem Teil des oberen Montagekörpers 19 und vom Kopfteil 5 des Gehäuses umschlossen ist, so dass sie gut erreichbar über diesen hinausragt. Eine zwischen der Betätigungstaste 44 und dem Dichtkörper 70 angeordnete Schraubenfeder 77 federt die Betätigungstaste 44 beim Niederdrücken aus ihrer obersten, in Fig.3 dargestellten Position ab und unterstützt die Rückwärtsbewegung des Ventilschliesskörpers 41 in Schliessposition nach Loslassen der Betätigungstaste 44.

Der Druck des Wassers im zu schliessenden Kanalteil 78 wirkt an der diesem zugekehrten Stirnfläche 79 des Schliessteils 65 und wirkt somit einem Druck auf die Betätigungstaste 44 entgegen. Da dieser Druck insbesondere zum Absperren von mit Kohlensäure angereichertem Wasser zu gross wäre, um die Taste mit einer für eine komfortable Bedienung begrenzten Kraft niederzudrücken, ist ein Druckausgleichskanal 82 vorgesehen, der den zu schliessenden Kanalteil 78 mit einem an der hinteren Stirnfläche 81 des Ventilschliesskörpers 41 vorgesehenen Druckausgleichsraum 80 verbindet.

Durch die Führung des Führungskolbens 66 im Dichtkörper 70 ist der Druckausgleichsraum 80 durch die für die Führung vorgesehene Bohrung 69 und seine bis zum Ventilschaft 67 radial verlaufende innere Querfläche 83 begrenzt. Die Grösse der Gegendruckkraft ist somit proportional zur Grösse dieser Querfläche 83 bzw. proportional zur gleich grossen, den Druckausgleichsraum 80 begrenzenden Stirnfläche 81 des Führungskolbens 66.

Vorzugsweise ist der Druckausgleichskanal 82 entsprechend der Darstellung in Fig.2 oder Fig.3 als Bohrung axial durch den Ventilschliesskörper 41 und einen Teil des Ventilschaftes 67 geführt und weist im Ventilschaft 67 mindestens eine Querbohrung 84 auf, so dass diese Axialbohrung zur Vervollständigung des Druckausgleichskanals 82 mit dem Druckausgleichsraum 80 verbunden ist.

An der Stirnfläche 81 des Führungskolbens 66 des Ventilschliesskörpers 41 sind Distanzwarzen 85 vorgesehen, die verhindern, dass sich die Grösse des Druckausgleichsraums 80 bis auf Null reduziert und folglich die Querbohrung 84 und damit der Druckausgleichskanal 82 durch die Wand der den Ventilschaft 67 führenden Bohrung 68 geschlossen wird.

Der taillierte Ventilschliesskörper 41 ist beispielsweise im Druckgussverfahren aus einem hierzu geeigneten Material wie z.B. Kunststoff hergestellt und dabei mit einem leicht konischen, zentralen Druckausgleichskanal 82 versehen. Dieser geht im Bereich seines Führungskolbens 66 in eine Aufnahmebohrung 86 für den Ventilschaft 67 über, in der dieser durch eine die Montage vereinfachende Presspassung gehalten ist. Eine Oberflächenprofilierung 87 in dem betreffenden Bereich des Ventilschaftes verbessert die Verankerung der Presspassung.

Der die ,Abdichtung des Ventilschaftes 67 im Dichtkörper 70 übernehmende 0-Ring 71 lässt sich einfach, über den Ventilschaft 67 geschoben, in eine Ausdrehung 88 des Dichtkörpers 70 einschieben, wo er anschliessend durch eine eingepresste Scheibe 89 gesichert wird.

Die Betätigungstaste 44 am äusseren Ende des Ventilschaftes 67 besteht aus einem zylindrischen inneren Tastenkörper 90 und einem diesen einschliessenden, kappenförmigen Tastengehäuse 91. Der innere Tastenkörper 90 ist bis zum Anschlag an einem in eine Nut des Ventilschafts 67 eingreifenden Benzing- oder Seegerring oder Sicherungsring 92 auf das mit einem Schraubgewinde versehene Ventilschaftende 93 aufgeschraubt. Das Ventilschaftende 93 umschliesst einen eingeschraubten Verschlusszapfen 94, der den durchlaufenden Zentralkanal 95 verschliesst. Der Verschlusszapfen 94 ermöglicht eine Entlüftung des Druckausgleichskanals 82 sowie des Druckausgleichsraumes 80. Für die Befestigung des kappenförmigen Tastengehäuses 91 am inneren Tastenkörper 90 ist eine Rastverbindung vorgesehen, die aus einer im Querschnitt hakenförmigen, mehrfach längsgeschlitzten inneren Rasthülse 96 besteht und konzentrisch am Tastengehäuse 91 angeformt ist. Somit lässt sich das Tastengehäuse 91 druckknopfartig auf den am Ventilschaft 67 befestigten Tastenkörper 90 einrasten.

Ein weiteres Ausführungsbeispiel einer oberen, eine Hubventil aufweisenden Ventilanordnung 17 wird im Folgenden an Hand der Fig.4 und 5 näher erläutert.

Das Gehäuse 8 der Ventilanordnung 17 besteht aus einem unteren und oberen Gehäusekörper 14,19, die über einen Verbindungsstutzen 42 formschlüssig ineinander greifen und durch einen am Verbindungsstutzen 42 vorgesehenen 0-Ring 43 gegenseitig abgedichtet sind. Um die Umfangsposition des Auslassstutzens 21 relativ zu dem für eine feststehende Anordnung vorgesehenen unteren Gehäusekörper 14 verändern zu können, sind sie in axialer Richtung derart aneinander befestigt, dass sie gegeneinander verdrehbar sind. Hierzu dienen zwei im Querschnitt u-förmige Halbringe 34,35, die radial von aussen in umlaufende Nuten 32,33 eingesetzt sind. Eine über sie aufgeschobene Hülse 36 sichert sie in dieser Position. Wie weiter oben beschrieben kann auf die Hülse 36 verzichtet werden.

Der Ventilsitzkörper 15 ist mit der Innenwand 61 des unteren Gehäusekörpers 14 verschraubt und zwischen einem inneren Absatz 62 und der Stirnseite 63 des Verbindungsstutzens 42 eingeschlossen, so dass er gemeinsam mit dem unteren Gehäusekörper 14 feststehend gehalten ist.

Der Ventilschliesskörper 41 ist länglich und tailliert und bildet mit seinem einen Ende einen mit einem Dichtring 64 zusammenwirkender Schliessteil 65, während sein anderes Ende einen Führungskolben 66 bildet, von dem sich ein Ventilschaft 67 nach Art einer Kolbenstange wegerstreckt. Dieser Führungskolben 66 des Ventilschliesskörpers 41 und der Ventilschaft 67 sind in gegeneinander abgestuften Bohrungen 68,69 eines im oberen Gehäusekörper 19 vorgesehenen Dichtkörpers 70 geführt, sodass dieser, unterstützt durch Dichtringe 71,72, den Ventilraum 73 nach aussen abdichtet. Der Dichtkörper 70 ist mit Gewindeeingriff vom oberen Teil einer zentralen Bohrung 74 des oberen Gehäusekörpers 19 aufgenommen und liegt mit einer Schulterfläche 75 an einer ebenen Radialfläche 76 desselben an.

Am äusseren Ende des Ventilschaftes 67 ist eine Betätigungstaste 44 befestigt, die von einem Teil des oberen Gehäusekörpers 19 umschlossen ist, so dass sie gut erreichbar über diesen hinausragt. Eine zwischen der Betätigungstaste 44 und dem Dichtkörper 70 angeordnete Schraubenfeder 77 federt die Betätigungstaste 44 beim Niederdrücken aus ihrer obersten, in Fig.5 dargestellten Position ab.

Der Druck des Wassers im zu schliessenden Kanalteil 78 wirkt an der diesem zugekehrten Stirnfläche 79 des Schliessteils 65 und wirkt somit einem Druck auf die Betätigungstaste 44 entgegen. Da dieser Druck insbesondere zum Absperren von mit Kohlensäure angereichertem Wasser zu gross wäre, um die Taste 44 mit einer für eine komfortable Bedienung begrenzten Kraft niederzudrücken, ist ein Druckausgleichskanal 82 vorgesehen, der den zu schliessenden Kanalteil 78 mit einem an der hinteren Stirnfläche 81 des Ventilschliesskörpers 41 vorgesehenen Druckausgleichsraum 80 verbindet.

Durch die Führung des Führungskolbens 66 im Dichtkörper 70 ist der Druckausgleichsraum 80 durch die für die Führung vorgesehene Bohrung 69 und seine bis zum Ventilschaft 67 radial verlaufende innere Querfläche 83 begrenzt. Die Grösse der Gegendruckkraft ist somit proportional zur Grösse dieser Querfläche 83 bzw. proportional zur gleich grossen, den Druckausgleichsraum 80 begrenzenden Stirnfläche 81 des Führungskolbens 66.

Vorzugsweise ist der Druckausgleichskanal 82 entsprechend der Darstellung in Fig.4 oder Fig.5 als Bohrung axial durch den Ventilschliesskörper 41 und einen Teil des Ventilschaftes 67 geführt und weist im Ventilschaft 67 mindestens eine Querbohrung 84 auf, so dass diese Axialbohrung zur Vervollständigung des Druckausgleichskanals 82 mit dem Druckausgleichsraum 80 verbunden werden kann.

Die Verbindung zum Druckausgleichsraum 80 ist jedoch entsprechend der Darstellung in Fig.5 bei geschlossenem Ventil, d.h. wenn sich der Schliessteil 65 in Schliessposition am Ventilsitzkörper 15 befindet, ebenfalls geschlossen. Dies ergibt sich durch ein Pilotventilsystem, dessen Steuerorgan durch den Ventilschaft 67 gebildet ist. Hierzu ist dieser im Ventilschliesskörper 41 begrenzt verschiebbar geführt und an seinen beiden Enden mit einer Schliesseinrichtung 97 bzw. 98 versehen. Diese Schliesseinrichtungen 97,98 haben jeweils einen in einer Nut des Ventilschliesskörpers 41 gehaltenen 0-Ring 99 bzw. 100 mit dem ein Umfangsteil 101 des Ventilschaftes 67 bzw. die zylindrische Umfangsfläche 102 eines am Ende des Ventilschaftes 67 befestigten Dichtsitzkörpers 103 in Dichtkontakt gelangt.

Die Schliesseinrichtungen 97,98 treten abwechselnd in Aktion. Wie die Ventilschliessposition nach Fig.5 zeigt, ist der Ventilschaft 67 relativ zum Ventilschliesskörper 41 nach oben verschoben, so dass sich der endseitige Verschlusskörper 103 in Dichtkontakt mit dem 0-Ring 100 befindet, während der Umfangsteil 101 vom zugehörigen O-Ring 97 einen Abstand 104 hat, so dass der Druckausgleichsraum 80 am 0-Ring 99 vorbei mit einem durch den Führungskolben 66 verlaufenden Entlüftungskanal 105 verbunden ist, der nach aussen zu dem Auslassstutzen 21 führt. Folglich wirkt am Schliessteil 65 des Ventilschliesskörpers 41 eine Schliesskraft, die der Druckdifferenz zwischen dem abzusperrenden Kanalteil 78 und dem im Auslassstutzen 21 vorhandenen Atmosphärendruck proportional ist.

Zum Öffnen des Ventils hingegen ist es nicht erforderlich, an der Betätigungstaste 44 eine solchem Druck entsprechende Kraft aufzuwenden, denn mittels des Pilotventilsystems wird zuvor im Druckausgleichsraum 80 ein entsprechender Gegendruck aufgebaut. Die Betätigungstaste 44 bewegt beim Niederdrücken zuerst nur den Ventilschaft 67 nach unten, bis dieser mit einem an seinen dichtenden Umfangsteil 101 angrenzenden Absatz 106 an einem zum 0-Ring 99 benachbarten inneren Absatz 107 des Ventilschliesskörpers 41 zum Anschlag gelangt. Beim Erreichen dieser Position bewegt sich der Umfangsteil 101 des Ventilschaftes 67 in Dichtkontakt mit dem 0-Ring 99 und der Dichtsitzkörper 103 am unteren Ende des Ventilschaftes 67 löst sich vom Dichtkontakt mit dem O-Ring 100. Gleichzeitig bewegt sich die obere Querbohrung 84 des Druckausgleichskanals 82 nach unten in den Druckausgleichsraum 80 hinein, während eine andere Querbohrung 108 im Bereich des unteren, durch einen Zapfen 109 geschlossenen Endes des Ventilschaftes 67 sich zu einem Spaltraum 110 bewegt, der sich durch die Ablösung des Dichtsitzkörpers 103 vom 0-Ring 100 an diesem vorbei vollständig ausbildet, mit der Folge der Öffnung einer Verbindung zwischen dem unter Druck stehenden Kanalteil 78 und dem Druckausgleichsraum 80. Der sich somit dort aufgrund der zahlreichen Verengungen gebremst aufbauende Gegendruck erleichtert das anschliessende Niederdrücken des Ventilschliesskörpers 41 bis zu einer vollständig geöffneten Ventilposition entsprechend der Darstellung in Fig.4.

Der taillierte Ventilschliesskörper 41 ist beispielsweise im Druckgiessverfahren aus einem hierzu geeigneten Material wie z.B. Kunststoff hergestellt und mit einer durchlaufenden Axialbohrung 111 für die Führung des als Ventilsteuerorgan ausgebildeten Ventilschaftes 67 versehen. Dieser umschliesst im Bereich des Ventilschliesskörpers 41 den als Axialbohrung ausgeführten Druckausgleichskanal 82, während er in seinem oberen, mit der Betätigungstaste 44 verbundenen Bereich massiv ausgeführt ist.

Der die Abdichtung des Ventilschaftes 67 im Dichtkörper 70 übernehmende 0-Ring 71 lässt sich, über den Ventilschaft 67 geschoben, einfach in eine Ausdrehung 88 des Dichtkörpers 70 einschieben, wo er anschliessend durch eine eingepresste Scheibe 89 gesichert wird.

Die Betätigungstaste 44 am äusseren Ende des Ventilschaftes 67 besteht aus einem zylindrischen inneren Tastenkörper 90 und einem diesen einschliessenden, kappenförmigen Tastengehäuse 91. Der innere Tastenkörper 90 ist bis zum Anschlag an einem in eine Nut des Ventilschafts 67 eingreifenden Sicherungsring 92 auf das mit einem Schraubgewinde 112 versehene Ventilschaftende 93 aufgeschraubt. Für die Befestigung des kappenförmigen Tastengehäuses 91 am inneren Tastenkörper 90 ist eine Rastverbindung vorgesehen, die durch eine im Querschnitt hakenförmige, mehrfach längsgeschlitzte innere Rasthülse 96 gebildet ist und konzentrisch am Tastengehäuse 91 angeformt ist. Somit lässt das Tastengehäuse 91 druckknopfartig auf den am Ventilschaft 67 befestigten Tastenkörper 90 einrasten.

Es ist auch möglich, bei der Armatur gemäss Fig. 4 und 5, den Entlüftungskanal 105 zu ersetzen durch einen radialen Durchlass im Mittelbereich des Ventilschliesskörpers 41, der den mit dem Auslassstutzen 21 verbundenen Ventilraum 73 dauernd mit einem, radial innen vom Ventilschaft 67 begrenzten, vorzugsweise kreisringförmigen Hohlraum verbindet, der von dem genannten radialen Durchlass in axialer Richtung bis zum Dichtsitzkörper 103 reicht. Mittels der Querbohrung 108 ist dann der Druckausgleichskanal 82 dauernd mit dem Auslassstutzen 21 und somit der Umgebung verbunden.

Weiter ist es, bei einer Ventilkörper- Ventilsitzanordnung gemäss Fig. 4 und 5 auch denkbar, den Druckausgleichsraum 80 dauernd mit dem zuleitunsseitigen Kanalteil 78 in Verbindung zu halten, beispielsweise via eines Druckausgleichskanals 82 gemäss Fig. 1 bis 3. Die druckmässig aktive, den Druckausgleichsraum begrenzende Fläche des Ventilschliesskörpers 41 ist kleiner als die druckmässig aktive, dem Kanalteil 78 zugewandte Fläche des Ventilschliesskörpers 41.

## Patentansprüche

1. Sanitärarmatur mit einem für verschiedene Flüssigkeitsqualitäten bestimmten Auslassstutzen (20, 21), in den getrennt voneinander durch ein gemeinsames Armaturengehäuse (1) geführte Kanalsysteme (50,56) münden, wobei in jedem Kanalsystem (50,56) mindestens eine, von der anderen funktionell getrennte Ventilanordnung (17,53) und für mindestens eines der durch das Armaturengehäuse (1) geführten Kanalsysteme (56) eine Hubventilanordnung (17) vorgesehen sind, die einen eine Hubbewegung ausführenden Ventilschliesskörper (41) aufweist, wobei die Hubbewegung durch die Druckbetätigung eines mit ihm verbundenen und in Richtung der Hubbewegung wirkenden Betätigungselementes (44) auslösbar ist, **dadurch gekennzeichnet, dass** zwei voneinander getrennte Auslassstutzen (20, 21) vorhanden sind, in die je eines der Kanalsysteme (50, 56) mündet, das Kanalsystem (56) mit der Hubventilanordnung (17) zum Verbinden mit einer Quelle für mit Kohlansäure angereichertem Wasser oder andern Getränk bestimmt ist und zusätzlich zur Hubventilanordnung (17) im Armaturengehäuse (1) eine Kompensatoranordnung (18) zur veränderbaren Festeinstellung der Grösse eines Strömungsquerschnittes aufweist, und dass hydraulisch wirkende Mittel (80,82,84,108,110) zur Reduzierung der Kraft der Druckbetätigung vorgesehen sind.

2. Sanitärarmatur nach Anspruch 1, **dadurch gekennzeichnet, dass** der Ventilschliesskörper (41) mit einem an ihm befestigten Ventilschaft (67) in einem inneren Dichtkörper (70) des Armaturengehäuses (1) kolbenartig geführt und abgedichtet ist, wobei die hydraulisch wirkenden Mittel (80,82,84,108,110) eine Verbindung aufweisen, die zwischen einem durch den Ventilschliesskörper (41) zu schliessenden Kanalteil (78) des betreffenden Kanalsystems (56) und einem vom Dichtkörper (70) des Armaturengehäuses (1) und dem Ventilschliesskörper (41) begrenzten Gegendruckraum (80) verläuft.

3. Sanitärarmatur nach Anspruch 2, **dadurch gekennzeichnet, dass** die hydraulische Verbindung aus einem axial durch den Ventilschliesskörper (41) und mindestens einen Teil des Ventilschaftes (67) geführten Druckausgleichskanal (82) besteht, der durch mindestens eine Querbohrung (84) mit dem Gegendruckraum (80) verbunden ist.

4. Sanitärarmatur nach einem der Ansprüche 1 bis 3, **dadurch gekennzeichnet, dass** an dem Ventilschliesskörper (41) eine Pilotventilanordnung (97-110) vorgesehen ist, mit einem relativ zum Ventilschliesskörper (41) verschiebbaren Ventilschaft (67), so dass dieser ein Steuerorgan bildet, zum Öffnen und Schliessen der durch ihn hindurchgeführten hydraulischen Verbindung.

5. Sanitärarmatur nach einem der Ansprüche 1 bis 4, **dadurch gekennzeichnet, dass** die Kompensatoranordnung (18) einen länglichen Strömungskörper (58) aufweist, der von einem sich in Strömungsrichtung erweiternden Kanalteil (16) auf zumindest einem Teil seiner Länge umschlossen ist und der an einem sich in den Kanal hinein erstreckenden, hinsichtlich seiner Kontaktposition mit dem Strömungskörper (58) verstellbaren Anschlag (60) anliegt, so dass die Stellposition des Anschlags die Grösse des Strömungsquerschnitts zwischen diesem Kanalteil (16) und dem Strömungskörper (58) bestimmt.

6. Sanitärarmatur nach einem der Ansprüche 1 bis 5, mit einem säulenartigen Armaturengehäuse (1), das mehrere übereinander angeordnete, gegeneinander verdrehbar abgedichtete Gehäuseteile (3-5) aufweist, **dadurch gekennzeichnet, dass** der oberste Gehäuseteil als einen der Abflussstutzen (21) aufweisender Gehäusekopf (5) ausbildet ist und er das für die Druckbetätigung bestimmte Betätigungselement (44) mit nach oben gerichteter Betätigungsfläche umfasst, wobei am angrenzenden Gehäuseteil (4) der zweite Abflussstutzen (21) angeformt ist.

7. Sanitärarmatur nach Anspruch 1, **dadurch gekennzeichnet, dass** der Ventilschliesskörpes (41) in einem Dichtkörpes (70) dichtend und hubbeweglichgeführt und von einem Ventilsitzkörper (15) umschlossen ist, und die hydraulisch wirkenden Mittel (80, 82, 84, 108, 110) einen von der vorderen, einem abzusperrenden Kanalteil (78) zugekehrten Stirnfläche (79) des Ventilschliesskörper (41) bis zu einem an dessen hintere Stirnfläche (81) angrenzenden Druckausgleichsraum (80) verlaufenden Druckausgleichskanal (82) aufweisen.

8. Sanitärarmatur nach Anspruch 7, **dadurch gekennzeichnet, dass** der Ventilschliesskörper (41) einen Schliessteil (65) und einen Führungskolben (66) aufweist und der Druckausgleichskanal (82) axial durch den Ventilschliesskörper (41) und einen Teil eines mit diesem verbundenen Ventilschaftes (67) verläuft, wobei mindestens eine Querbohrung (84,108) im Ventilschaft (67) einen Verbindungsabschnitt des Druckausgleichskanals (82) bildet.

9. Sanitärarmatur nach Anspruch 7 oder 8, **dadurch gekennzeichnet, dass** der Druckausgleichskanal (82) zumindest in einer bestimmten Position des Ventilschliesskörpers (41) über einen verschliessbaren Entlüftungskanal (105) mit der Atmosphäre verbunden ist.

10. Sanitärarmatur nach einem der Ansprüche 7 bis 9, **dadurch gekennzeichnet, dass** der Ventilsitzkörper (15) eine zylindrische Ventilsitzfläche (47) aufweist und an der hinteren Stirnfläche (81) mindestens eine Distanzwarze (85) vorgesehen ist, die einen Anschlag an einer inneren Querfläche (83) des Dichtkörpers (70) bildet.

11. Sanitärarmatur nach Anspruch 8 oder 9, **dadurch gekennzeichnet, dass** der den Druckausgleichskanal (82) einschliessende Ventilschaft (67) im Ventilschliesskörper (41) axialverschiebbar geführt ist und über einen Anschlag (106,107) in Antriebsverbindung mit dem Ventilschliesskörper (41) steht, wobei im Bereich des Druckausgleichsraumes (80) und am Schliessteil (65) des Ventilschliesskörpers (41) der Ventilschaft (67) je eine Schliesseinrichtung (97,98) eines für den Druckausgleichskanal (82) vorgesehenen Pilotventilsystems aufweist, derart, dass in Ventilschliessposition die eine Schliesseinrichtung (98) am Schliessteil (65) des Ventilschliesskörpers (41) geschlossen ist, während die andere Schliesseinrichtung (97) eine Verbindung des Druckausgleichsraums (80) zur Atmosphäre freigibt und eine durch das Betätigungselement (44) ausgelöste Verschiebung des Ventilschafts (67) die andere Schliesseinrichtung (97) am Druckausgleichsraum (80) schliesst und die Schliesseinrichtung (98) am Schliessteil (65) des Ventilschliesskörpers (41) öffnet.

## Claims

1. Sanitary fitting comprising an outlet connecting branch (20, 21), intended for various grades of liquid, into which two mutually separate duct systems (50, 56) led through a common fitting housing (1) emerge, wherein in each duct system (50, 56) there are provided at least one valve arrangement (17, 53), functionally separated from the other, and, for at least one of the duct systems (56) led through the fitting housing (1), a lifting valve arrangement (17), which has a valve-closing body (41) that performs a lifting motion, the lifting motion being able to be triggered by the pressure actuation of an actuating element (44) connected to the said valve-closing body and acting in the direction of the lifting motion, **characterized in that** two mutually separate outlet connecting branches (20, 21) are present, into which, respectively, one of the duct systems (50, 56) emerges, the duct system (56) with the lifting valve arrangement (17) is intended to connect to a source for carbonated water or some other drink and has in addition to the lifting valve arrangement (17), in the fitting housing (1), a compensator arrangement (18) for the variable fixed setting of the size of a flow area, and **in that** hydraulically operating means (80, 82, 84, 108, 110) are provided to reduce the force of the pressure actuation.

2. Sanitary fitting according to Claim 1, **characterized in that** the valve-closing body (41), with a valve stem (67) fastened thereto, is guided in the manner of a piston and sealed in an inner sealing body (70) of the fitting housing (1), wherein the hydraulically operating means (80, 82, 84, 108, 110) have a connection which runs between a duct part (78) of the relevant duct system (56), which duct part is to be closed by the valve-closing body (41), and a back pressure chamber (80) bounded by the sealing body (70) of the fitting housing (1) and the valve-closing body (41).

3. Sanitary fitting according to Claim 2, **characterized in that** the hydraulic connection comprises a pressure-equalizing duct (82), which is led axially through the valve-closing body (41) and at least a part of the valve stem (69) and is connected by at least one transverse bore (84) to the back pressure chamber (80).

4. Sanitary fitting according to one of Claims 1 to 3, **characterized in that** on the valve-closing body (41) there is provided a pilot valve arrangement (97-110), having a valve stem (67) displaceable relative to the valve-closing body (41), so that the said valve stem forms a control member for opening and closing the hydraulic connection which is led through it.

5. Sanitary fitting according to one of Claims 1 to 4, **characterized in that** the compensator arrangement (18) has an elongated flow body (58), which is enclosed on at least a part of its length by a duct part (16) widening in the flow direction, and which bears against a stop (60) that extends into the duct and is adjustable with respect to its contact position with the flow body (58), so that the setting position of the stop determines the size of the flow area between this duct part (16) and the flow body (58).

6. Sanitary fitting according to one of Claims 1 to 5, comprising a pillar-like fitting housing (1), which has a plurality of housing parts (3-5) disposed one above the other and sealed such that they can turned in relation to one another, **characterized in that** the topmost housing part is configured as a housing head (5) having the outflow connecting branch (21) and comprises the actuating element (44), with upwardly directed actuating face, intended for the pressure actuation, the second outflow connecting branch (21) being attached to the adjoining housing part (4).

7. Sanitary fitting according to Claim 1, **characterized in that** the valve-closing body (41) is guided in a seal-forming manner in a sealing body (70) such that it is free to perform a lifting motion and is enclosed by a valve seat body (15), and the hydraulically operating means (80, 82, 84, 108, 110) have a pressure-equalizing duct (82) running from the front end face (79) of the valve-closing body (41), which end face faces a duct part (78) to be shut off, to a pressure-equalizing chamber (80) adjacent to the rear end face (81) of said valve-closing body.

8. Sanitary fitting according to Claim 7, **characterized in that** the valve-closing body (41) has a closing part (65) and a guide piston (66), and the pressure-equalizing duct (82) runs axially through the valve-closing body (41) and a part of a valve stem (67) connected thereto, at least one transverse bore (84, 108) in the valve stem (67) forming a connecting portion of the pressure-equalizing duct (82).

9. Sanitary fitting according to Claim 7 or 8, **characterized in that** the pressure-equalizing duct (82), at least in a certain position of the valve-closing body (41), is connected to the atmosphere via a closable ventilation duct (105).

10. Sanitary fitting according to one of Claims 7 to 9, **characterized in that** the valve seat body (15) has a cylindrical valve seat face (47), and on the rear end face (81) there is provided at least one spacer protuberance (85), which forms a stop on an inner transverse face (83) of the sealing body (70).

11. Sanitary fitting according to Claim 8 or 9, **characterized in that** the valve stem (67) enclosing the pressure-equalizing duct (82) is led in an axially displaceable manner in the valve-closing body (41) and is drive-connected to the valve-closing body (41) via a stop (106, 107), in the region of the pressure-equalizing chamber (80) and on the closing part (65) of the valve-closing body (41), respectively, the valve stem (67) having a closing mechanism (97, 98) of a pilot valve system provided for the pressure-equalizing duct (82), such that, in the valve-closing position, one closing mechanism (98) on the closing part (65) of the valve-closing body (41) is closed, whilst the other closing mechanism (97) opens up a connection of the pressure-equalizing chamber (80) to the atmosphere, and a displacement of the valve stem (67), triggered by the actuating element (44), closes the other closing mechanism (97) on the pressure-equalizing chamber (80) and opens the closing mechanism (98) on the closing part (65) of the valve-closing body (41).

## Revendications

1. Organe de robinetterie sanitaire comprenant une tubulure de sortie (20, 21) destinée à des qualités de liquides différentes, dans laquelle débouchent deux systèmes formant canaux (50, 56) amenés séparément l'un de l'autre à travers un corps d'organe de robinetterie (1) commun, au moins un dispositif formant vanne (17, 53) séparé de l'autre sur le plan fonctionnel étant prévu dans chaque système formant canal (50, 56) et, pour au moins l'un (56) des systèmes formant canaux amenés à travers le corps d'organe de robinetterie (1), étant prévu un dispositif formant vanne à soupape (17), qui comporte un corps obturateur de vanne (41) exécutant un mouvement de levée, le mouvement de levée pouvant être déclenché par l'actionnement en pression d'un élément d'actionnement (44) relié à lui et agissant dans la direction du mouvement de levée, **caractérisé en ce que** sont prévues deux tubulures de sortie (20, 21) séparées l'une de l'autre, dans chacune desquelles débouche l'un des systèmes formant canaux (50, 56), le système formant canal (56) avec le dispositif formant vanne à soupape (17) étant destiné à la liaison avec une source d'eau enrichie en gaz carbonique ou autre boisson et comportant un dispositif compensateur (18) en sus du dispositif formant vanne à soupape (17) dans le corps d'organe de robinetterie (1) pour le réglage ferme, variable, de la grandeur d'une section transversale d'écoulement, et que des moyens agissant hydrauliquement (80, 82, 84, 108, 110) sont prévus pour réduire la force de l'actionnement en pression.

2. Organe de robinetterie sanitaire suivant la revendication 1, **caractérisé en ce que** le corps obturateur de vanne (41), par une tige de soupape (67) fixée sur lui, est guidé à la manière d'un piston et étanchéifié dans un corps d'étanchéité (70) intérieur du corps d'organe de robinetterie (1), les moyens (80, 82, 84, 108, 110) agissant hydrauliquement présentant une liaison qui s'étend entre une partie de canal (78), à obturer par le corps obturateur de vanne (41), du système formant canal (56) concerné et un espace de contre-pression (80) délimité par le corps d'étanchéité (70) du corps d'organe de robinetterie (1) et le corps obturateur de vanne (41).

3. Organe de robinetterie sanitaire suivant la revendication 2, **caractérisé en ce que** la liaison hydraulique est constituée par un canal de compensation de pression (82), orienté axialement à travers le corps obturateur de vanne (41) et au moins une partie de la tige de soupape (67), lequel canal est relié à l'espace de contre-pression (80) par au moins un alésage transversal (84).

4. Organe de robinetterie sanitaire suivant l'une des revendications 1 à 3, **caractérisé en ce que** sur le corps obturateur de vanne (41) est prévu un dispositif formant vanne pilote (97 - 110) comportant une tige de soupape (67) capable de translation par rapport au corps obturateur de vanne (41), de sorte que celle-ci constitue un organe de commande pour l'ouverture et la fermeture de la liaison hydraulique la traversant.

5. Organe de robinetterie sanitaire suivant l'une des revendications 1 à 4, **caractérisé en ce que** le dispositif compensateur (18) présente un corps d'écoulement (58) allongé, qui est entouré au moins sur une partie de sa longueur par une partie de canal (16) s'élargissant dans la direction d'écoulement et qui est en appui sur une butée (60) s'étendant à l'intérieur du canal, réglable vis à vis de sa position de contact avec le corps d'écoulement (58), de sorte que la position de réglage de la butée détermine la grandeur de la section transversale d'écoulement entre cette partie de canal (16) et le corps d'écoulement (58).

6. Organe de robinetterie sanitaire suivant l'une des revendications 1 à 5, présentant un corps d'organe de robinetterie (1) de type colonne, qui présente plusieurs pièces de corps superposées les unes aux autres, étanchéifiées, capables de rotation les unes par rapport aux autres, **caractérisé en ce que** la pièce de corps supérieure est réalisée comme une tête de corps (5) présentant la tubulure de sortie (21) et **en ce qu'**elle comprend un élément d'actionnement (44) à surface d'actionnement orientée vers le haut destiné à l'actionnement en pression, la seconde tubulure de sortie (21) étant formée sur la pièce de corps adjacente (4).

7. Organe de robinetterie sanitaire suivant la revendication 1, **caractérisé en ce que** le corps obturateur de vanne (41) est guidé, mobile en levée et de manière à créer une étanchéité, dans un corps d'étanchéité (70) et est enfermé par un corps formant siège de vanne (15), et les moyens (80, 82, 84, 108, 110) agissant hydrauliquement comportent un canal de compensation de pression (82) s'étendant de la face frontale (79) avant du corps obturateur de vanne (41), orientée sur une partie de canal (78) à obturer, jusqu'à un espace de compensation de pression (80) adjacent à sa face frontale arrière (81).

8. Organe de robinetterie sanitaire suivant la revendication 7, **caractérisé en ce que** le corps obturateur de vanne (41) présente une pièce de fermeture (65) et un piston de guidage (66) et le canal de compensation de pression (82) s'étend axialement à travers le corps obturateur de vanne (41) et une partie d'une tige de soupape (67) reliée à celui-ci, au moins un alésage transversal (84, 108) dans la tige de soupape (67) formant une section de liaison du canal de compensation de pression (82).

9. Organe de robinetterie sanitaire suivant l'une des revendications 7 et 8, **caractérisé en ce que**, au moins dans une position déterminée du corps obturateur de vanne (41), le canal de compensation de pression (82) est relié à l'atmosphère par l'intermédiaire d'un canal de purge d'air (105) obturable.

10. Organe de robinetterie sanitaire suivant l'une des revendications 7 à 9, **caractérisé en ce que** le corps formant siège de vanne (15) présente une surface de siège de vanne (47) cylindrique et **en ce qu'**à la surface frontale (81) arrière est prévu au moins un téton d'écartement (85), qui constitue une butée sur une surface transversale (83) intérieure du corps d'étanchéité (70).

11. Organe de robinetterie sanitaire suivant l'une des revendications 8 et 9, **caractérisé en ce que** la tige de soupape (67) enfermant le canal de compensation de pression (82) est guidée en translation axiale dans le corps obturateur de vanne (41) et est en liaison d'entraînement avec le corps obturateur de vanne (41) par l'intermédiaire d'une butée (106, 107), la tige de soupape (67) présentant dans la région de l'espace de compensation de pression (80) et sur la pièce de fermeture (65) du corps obturateur de vanne (41) respectivement un dispositif de fermeture (97, 98) pour un système formant vanne pilote prévu pour le canal de compensation de pression (82), tel qu'en position de fermeture de la vanne, l'un des dispositifs de fermeture (98) est fermé sur la pièce de fermeture (65) du corps obturateur de vanne (41), tandis que l'autre dispositif de fermeture (97) libère une liaison de l'espace de compensation de pression (80) à l'atmosphère et une translation de la tige de soupape (67) déclenchée par l'élément d'actionnement (44) ferme l'autre dispositif de fermeture (97) sur l'espace de compensation de pression (80) et ouvre le dispositif de fermeture (98) sur la pièce de fermeture (65) du corps obturateur de vanne (41).
